# EUROPÄISCHE PATENTANMELDUNG

(11) **EP 4 228 250 A1**
(43) Veröffentlichungstag der Anmeldung: **16.08.2023**
(21) Anmeldenummer: 22201729.5
(22) Anmeldetag: 14.10.2022
(51) Int. Cl.: H04N 7/14

(54) **VERFAHREN ZUR STEUERUNG EINES VIDEOKONFERENZSYSTEMS EINES GERICHTSSAAL-MEDIENSYSTEMS**

(30) Priorität: 14.10.2021 DE 102021126614; 22.02.2022 DE 102022104105
(71) Anmelder: COCOSOFT Systems GmbH, 13581 Berlin (DE)
(72) Erfinder: HESTERBERG, Jan Christian, 13503 Berlin (DE)
(74) Vertreter: Dantz, Dirk

(57) **Zusammenfassung**

Die Erfindung betrifft ein Verfahren zur Steuerung eines Videokonferenzsystems eines Gerichtssaalmediensystems mit den Verfahrensschritten Aufnahme einer ersten Videosequenz mit einer ersten Video-Kamera, Aufnahme einer zweiten Videosequenz mit einer zweiten Video-Kamera, Zusammenfügen der ersten Videosequenz und der zweiten Videosequenz zu einer zusammengesetzten Videosequenz und Übertragen der zusammengesetzten Videosequenz an ein Videokonferenzsystem, sowie ein Gerichtssaalmediensystem zur Durchführung einer Videokonferenz mit einer ersten und einer zweiten Steuereinheit und zwei Kameras, die mit der ersten Steuereinheit gekoppelt sind, wobei die Videokonferenzanwendung auf der ersten Steuereinheit ausgeführt wird.

## Beschreibung

Die Erfindung betrifft ein Verfahren zur Steuerung eines Videokonferenzsystems eines Gerichtssaalmediensystems mit den Verfahrensschritten Aufnahme einer ersten Videosequenz mit einer ersten Video-Kamera, Aufnahme einer zweiten Videosequenz mit einer zweiten Video-Kamera, Zusammenfügen der ersten Videosequenz und der zweiten Videosequenz zu einer zusammengesetzten Videosequenz und Übertragen der zusammengesetzten Videosequenz an ein Videokonferenzsystem, sowie ein Gerichtssaalmediensystem zur Durchführung einer Videokonferenz mit einer ersten und einer zweiten Steuereinheit und zwei Kameras, die mit der ersten Steuereinheit gekoppelt sind, wobei die Videokonferenzanwendung auf der ersten Steuereinheit ausgeführt wird.

Im Stand der Technik sind proprietäre Videokonferenzsysteme unterschiedlicher Hersteller und auch Web-basierte Videokonferenzsysteme bekannt. Die Standardisierungsbehörde ITU-T (International Telecommunication Union, Telecommunication Standardization Sector) definiert folgende Gerätegruppen:

### Videokonferenzendgeräte

Der Videokonferenzmarkt bietet eine Reihe von Anlagen- beziehungsweise Umsetzungsvarianten an, deren Ausstattung im Wesentlichen vom Einsatzzweck abhängt.

Bei Desktop-Systemen sind die notwendigen Komponenten in einem PC eingebaut. Es wird dafür neben einer externen Kamera (heute meist USB-Webcam) auch ein Mikrofon bzw. Headset benötigt. Man unterscheidet hardwarebasierte (Kodierung und Dekodierung auf einer Steckkarte) und rein software-basierte Desktop-Systeme. Neben den relativ geringen Kosten haben Desktopsysteme den Vorteil, dass der Anwender während der Videokonferenz vollen Zugriff auf seine Daten und die auf dem PC installierten Programme hat. Desktopsysteme eignen sich daher insbesondere dort, wo im Rahmen von Konferenzen auch eine gemeinsame Datenbearbeitung erfolgen soll.

Settop-Boxen / Rollabouts sind Kompaktsysteme und spezielle Geräte, zu deren Betrieb in der Regel lediglich noch ein Monitor und die entsprechenden Netzanschlüsse (ISDN und/oder LAN) benötigt werden. Aufgrund des geringen Gewichtes und der einfachen Installation eignen sich diese Geräte auch für den mobilen Einsatz.

Raumsysteme sind modular aufgebaute, leistungsstarke Anlagen. Durch variable Ausstattungsmerkmale sind Systemkonfigurationen für fast jede Anwendung möglich. Leistungsstarke Kameras, Raummikrofone und große Monitore erlauben auch in großen Konferenzräumen den Einbau dieser Systeme, die auch die Einbindung weiterer Peripherieeinrichtungen wie zum Beispiel Dokumentenkameras ermöglichen.

### Sonstige Geräte

Hierzu gehören die in der Entwicklung befindliche Mobilfunk-Videokonferenz per UMTS oder die Bildtelefonie.

### Multipoint Control Unit (MCU)

MCUs sind Sternverteiler - auch als Reflector bezeichnet - für Gruppenkonferenzen. Sie sind immer dann notwendig, wenn mehr als zwei Teilnehmer an einer Konferenz teilnehmen wollen. Es handelt sich um Hard- und/oder Softwarelösungen, die eine oder mehrere Mehrpunktkonferenzen verwalten und steuern. Die MCU ist mit allen Teilnehmern verbunden. Sie verwaltet und regelt die ein- und ausgehenden Video- und Audiodatenströme. In Deutschland werden MCUs zum Beispiel innerhalb des DFN-Vereins zum Betrieb seines Dienstes VideoConference eingesetzt. Aber auch Unternehmen und große Landesverwaltungen wie z. B. in NRW oder Bayern setzen MCUs für Videokommunikation ein. MCUs unterstützen u. a. die Protokolle H.323 und SIP.

All diesen Systemen ist gemeinsam, dass es je Videokonferenz-Kanal nur möglich ist, ein Bild einer Kamera zu übertragen. Bei Anwendungen in einem Gerichtssaal ist es aber von Interesse, gewisse an dem Verfahren beteiligte Gruppen, wie beispielsweise den Richter, und die Prozessparteien permanent sehen und hören zu können. Daher eignen sich die gegenwärtigen Systeme mit einer Kamera in einem Gerichtssaal nicht.

Es ist daher Aufgabe der vorliegenden Erfindung, ein Verfahren zur Steuerung eines Videokonferenzsystems bereitzustellen, dass auf kostengünstige Weise die Übertragung von mehreren Parteien aus dem Gerichtssaal ermöglicht, sowie ein entsprechendes Gerichtssaal-Mediensystem zur Durchführung des Verfahrens bereitzustellen.

Die Aufgabe wird mittels des Verfahrens zur Steuerung eines Videokonferenzsystems nach Anspruch 1 gelöst. Weitere vorteilhafte Ausgestaltungen sind in den Unteransprüchen beschrieben.

Das erfindungsgemäße Verfahren zur Steuerung eines Videokonferenzsystems weist vier Verfahrensschritte auf: Im ersten Verfahrensschritt wird eine erste Videosequenz mittels einer ersten Video-Kamera aufgenommen. Im zweiten Verfahrensschritt wird eine zweite Videosequenz mittels einer zweiten Video-Kamera aufgenommen. Die zwei Video-Kameras sind bevorzugt unabhängig voneinander steuerbar und optional an unterschiedlichen Orten angeordnet. Im dritten Verfahrensschritt wird die erste Videosequenz und die zweite Videosequenz zu einer zusammengesetzten Videosequenz zusammengefügt. Im vierten Verfahrensschritt wird die zusammengesetzte Videosequenz an ein Videokonferenzsystem übertragen.

Das erfindungsgemäße Verfahren weist den Vorteil auf, dass von einem Videosystem, das eine Mehrzahl von unabhängig voneinander steuerbare Video-Kameras aufweist, eine Videosequenz zusammengesetzt wird. Die an das Videokonferenzsystem übertragene zusammengesetzte Videosequenz weist also eine Mehrzahl von zeitlich parallelen Videosequenzen auf. Es besteht also die Möglichkeit, über einen einzelnen Kanal eines Video-Konferenzsystems zeitgleich zwei oder mehr Videosequenzen, die von zwei oder mehr unabhängig voneinander steuerbaren Video-Kameras aufgenommen sind, zu übertragen. Im Stand der Technik ist bisher für jede Videosequenz ein eigener Kanal eines Video-Konferenzsystems notwendig.

In einer Weiterbildung der Erfindung ist die Länge der ersten und der zweiten Videosequenz jeweils kleiner als 250 ms, bevorzugt kleiner als 150 ms und besonders bevorzugt kleiner als 100 ms. Diese geringe maximale zeitliche Länge gewährleistet, dass das Zusammenfügen der einzelnen Videosequenzen zu einer zusammengesetzten Videosequenz in so kurzer Zeit erfolgen kann, dass eine Übertragung an das VideoKonferenzsystem innerhalb der Latenzzeit stattfindet.

In einer weiteren Ausführung der Erfindung sind die Längen der ersten Videosequenz und der zweiten Videosequenz gleich lang. Erste und zweite Videosequenz weisen daher üblicherweise den gleichen Speicherbedarf auf.

In einer vorteilhaften Gestaltung der Erfindung werden die erste und die zweite Videosequenz in der zusammengesetzten Videosequenz nebeneinander dargestellt. Die erste und die zweite Videosequenz werden zeitgleich, aber lokal getrennt auf jeweils unterschiedlichen Ausgabeeinrichtungen dargestellt. Möglich ist außerdem eine gleichzeitige Ausgabe der ersten und der zweiten Videosequenz auf einer Ausgabeeinrichtung, z.B. als Splitscreen.

In einer weiteren Ausbildung der Erfindung werden mehrere mit der ersten Videokamera zeitlich aufeinanderfolgend aufgenommene Videosequenzen mit mehreren mit der zweiten Videokamera zeitlich aufeinanderfolgend aufgenommene Videosequenzen zusammengesetzt. Üblicherweise wird dabei eine mit der ersten Videokamera aufgenommene Videosequenz mit einer mit der zweiten Videokamera aufgenommenen Videosequenz zusammengesetzt, die den gleichen Zeitstempel aufweist, beide Videosequenzen sind also gleichzeitig aufgenommen. Zusätzlich können auch zeitlich längere Videosequenzen übertragen und ausgegeben werden.

In einer weiteren Ausgestaltung der Erfindung werden neben den zusammengesetzten Videosequenzen weitere Daten an das Videokonferenzsystem übertragen. Die weiteren Daten sind z.B. Bild- und/oder Toninhalte von beispielsweise Gutachten und/oder Zeugenaussagen, die ebenfalls über das Videokonferenzsystem und dessen Ausgabeeinrichtungen ausgegeben werden können.

In einer weiteren Ausführung der Erfindung wird die zusammengesetzte Videosequenz an andere Teilnehmer versendet, die in einer Entfernung vom Videokonferenzsystem angeordnet sind. Andere Teilnehmer sind z.B. auch weitere Videokonferenzsysteme, Speichereinrichtungen zur Archivierung etc.

In einer Weiterbildung der Erfindung werden die an das Videokonferenzsystem übertragenen Videosequenzen in einem Live-Stream an weitere Teilnehmer der Videokonferenz übertragen. Die weiteren Teilnehmer können daher eine Gerichtsverhandlung zeitgleich beobachten.

In einer weiteren Gestaltung der Erfindung erfolgt das Zusammensetzen der ersten Videosequenz mit der zweiten Videosequenz auf einer ersten Steuereinheit. Die erste Steuereinheit kann in einer Entfernung vom Videokonferenzsystem angeordnet sein, z.B. vorteilhafterweise außerhalb eines Gerichtssaales, wie beispielsweise in einem Technik- oder Serverraum.

In einer weiteren Ausgestaltung der Erfindung werden zwei zusammengesetzte Videosequenzen hintereinandergefügt. Damit können zeitlich beliebig langandauernde zusammengesetzte Videosequenzen mittels des Videokonferenzsystems übertragen und ausgegeben werden.

In einer Weiterbildung der Erfindung erfolgt das Zusammensetzen der ersten Videosequenz mit der zweiten Videosequenz und das Hintereinanderfügen der zusammengesetzten Videosequenzen auf voneinander getrennten Steuereinheiten. Die beiden Steuereinheiten können daher vorteilhafterweise getrennt voneinander angeordnet sein.

In einer weiteren Ausbildung der Erfindung erfolgt das Hintereinanderfügen der zusammengesetzten Videosequenzen auf einer zweiten Steuereinheit. Die zweite Steuereinheit kann in einer Entfernung vom Videokonferenzsystem angeordnet sein, z.B. vorteilhafterweise außerhalb eines Gerichtssaales, wie beispielsweise in einem Technik- oder Serverraum.

In einer weiteren Ausgestaltung der Erfindung erfolgt das Zusammensetzen der ersten Videosequenz mit der zweiten Videosequenz durch ein erstes Steuerprogramm. Das Zusammensetzen der ersten Videosequenz mit der zweiten Videosequenz erfolgt auf einer ersten Steuereinheit, die über ein geeignetes erstes Steuerprogramm in einem Speicher verfügt.

In einer weiteren Ausführung der Erfindung erfolgt das Hintereinanderfügen der zusammengesetzten Videosequenzen durch ein zweites Steuerprogramm. Das Hintereinanderfügen der zusammengesetzten erfolgt Videosequenzen auf einer zweiten Steuereinheit, die über ein geeignetes zweites Steuerprogramm in einem Speicher verfügt.

In einer Weiterbildung der Erfindung erfolgt das Zusammensetzen der ersten Videosequenz mit der zweiten Videosequenz und das Hintereinanderfügen der zusammengesetzten Videosequenzen durch voneinander getrennte Steuerprogramme. Die Steuerprogramme können auf voneinander räumlich getrennten Steuereinheiten gespeichert und ausgeführt werden. Die Steuerprogramme können aber auch in einer Steuereinheit in unterschiedlichen Speicherorten gespeichert sein.

Die Aufgabe wird außerdem mittels des Gerichtssaal-Mediensystems zur Durchführung von Videokonferenzen gelöst. Weitere vorteilhafte Ausführungen der Erfindung sind in den Unteransprüchen dargelegt.

Das erfindungsgemäße Gerichtssaal-Mediensystem zur Durchführung von Videokonferenzen weist eine erste Steuereinheit auf. Die erste Steuereinheit weist einen Prozessor und einen Speicher auf, die geeignet und dafür vorgesehen sind, ein Software-Programm auszuführen.

Das Gerichtssaal-Mediensystem weist außerdem zwei mit der ersten Steuereinheit gekoppelte Kameras auf, sowie eine zweite Steuereinheit, die geeignet und dafür vorgesehen ist, die Videokonferenz auszuführen.

In einer Weiterbildung der Erfindung ist die erste Steuereinheit Teil eines Mediensystems. Das Mediensystem weist eine oder bevorzugt eine Mehrzahl an Ausgabeeinrichtungen auf, vorzugsweise zur Ausgabe von Bild- und/oder Toninhalten. Außerdem weist das Mediensystem eine oder bevorzugt eine Mehrzahl von Quellen zur Eingabe von vorzugsweise von Bild- und/oder Toninhalten auf. Die erste Steuereinheit ist als Teil des Mediensystems in dem Mediensystem verbaut. Mittels der ersten Steuereinheit wird das Mediensystem gesteuert.

In einer weiteren Gestaltung der Erfindung ist die erste Steuereinheit als separate Steuereinheit des Mediensystems ausgeführt. Das Mediensystem weist eine oder bevorzugt eine Mehrzahl an Ausgabeeinrichtungen auf, vorzugsweise zur Ausgabe von Bild- und/oder Toninhalten. Außerdem weist das Mediensystem eine oder bevorzugt eine Mehrzahl von Quellen zur Eingabe von vorzugsweise Bild- und/oder Toninhalten auf. Das Mediensystem ist üblicherweise fest in einem Gerichtssaal angeordnet, wobei die erste Steuereinheit separat und damit in einer Entfernung vom Mediensystem angeordnet werden kann.

In einer weiteren Ausführung der Erfindung sind an das Mediensystem eine Vielzahl von unterschiedlichen Quellen und eine Vielzahl von unterschiedlichen Ausgabeeinrichtungen angeschlossen. Das Mediensystem weist eine Mehrzahl an Ausgabeeinrichtungen auf, vorzugsweise zur Ausgabe von Bild- und/oder Toninhalten. Dazu gehören z.B. Endgeräte wie Notebooks, Personal Computer, Smartphones, Bildschirme, Leinwände etc. Zusätzlich weist das Mediensystem eine Mehrzahl von Quellen zur Eingabe von Medieninhalten auf. Die Quellen sind z.B. Kameras, Photodetektoren und/oder Mikrophone und/oder Endgeräte, die über derartige Quellen verfügen bzw. an solche angeschlossen sind.

In einer Weiterbildung der Erfindung ist das Videokonferenzsystem an einen Eingang und an einen Ausgang des Mediensystems angeschlossen. Das Mediensystem wird über die Schnittstellen durch das Videokonferenzsystem derart gesteuert, dass es Medieninhalte ausgibt.

In einer weiteren Ausgestaltung der Erfindung ist das Videokonferenzsystem als Software auf der ersten Steuereinheit installiert. Das Videokonferenzsystem kann daher schnell und unproblematisch auch unterschiedlichen Quellen und/oder Ausgabeeinrichtungen angepasst werden.

In einer weiteren Ausbildung der Erfindung sind Inhalte der an das Mediensystem angeschlossenen Quellen durch das Mediensystem an das Videokonferenzsystem weiterleitbar. Die mittels der angeschlossenen Quellen erfassten Medieninhalte sind an das Videokonferenzsystem derart weiterleitbar, dass die Medieninhalte durch das Videokonferenzsystem ausgebbar sind.

In einer Weiterbildung der Erfindung sind Inhalte des Videokonferenzsystems über das Mediensystem an die an das Mediensystem angeschlossenen Ausgabeeinrichtungen weiterleitbar. Die mittels der angeschlossenen Quellen erfassten Medieninhalte sind an das Videokonferenzsystem derart weiterleitbar, dass die Medieninhalte durch das Videokonferenzsystem und die daran angeordneten Ausgabeeinrichtungen ausgebbar sind.

In einer weiteren Ausführung der Erfindung ist die zweite Steuereinheit Teil eines Videokonferenzsystems. Insbesondere ist die zweite Steuereinheit im Videokonferenzsystem angeordnet und/oder Teil des Videokonferenzsystems.

Die erfindungsgemäße Gerichtssaal-Mediensystem weist ebenfalls ein Control-Panel auf, das über die Control-Schnittstelle an die zentrale Steuereinheit angeschlossen ist. Das Control-Panel ist die zentrale Kontroll- bzw. Steuerungskomponente für die Steuerung des erfindungsgemäßen Gerichtssaal-Mediensystems. Es wird von dem Vorsitzenden oder einer dafür bestimmten Person bedient. Das Control-Panel ist im Gerichtssaal selbst angeordnet und wird in einer optionalen Ausgestaltung der Erfindung am Platz des Vorsitzenden angeordnet, kann aber an den Arbeitsplatz einer beauftragten Person weitergeleitet werden. In einer weiteren optionalen Ausgestaltung der Erfindung ist das Control-Panel ausschließlich aus dem Gerichtssaal heraus steuerbar. Dadurch besteht die Möglichkeit das Gerichtssaal-Mediensystem als geschlossenes System zu betreiben, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

Gerichtssaal-Mediensysteme unterliegen hierbei besonderen Anforderungen. Zum einem muss gewährleistet sein, dass Gerichtssaal-Mediensysteme nicht von außen durch Dritte korrumpiert werden können. Hierfür ist es in einer optionalen Ausgestaltung der Erfindung vorgesehen, dass das Gerichtssaal-Mediensystem als geschlossenes System betrieben wird. In einer besonders bevorzugten Ausführungsform wird das GerichtssaalMediensystem während eines Gerichtsverfahrens als geschlossenes System betrieben. Zum anderen muss das Gerichtssaal-Mediensystem darauf ausgelegt ein, dass den Verfahrensbeteiligten ihr beispielsweise im deutschen Grundgesetz verankertes Recht auf rechtliches Gehör gewährleistet werden kann - allerdings nur insoweit, wie dies der Vorsitzende Richter zulässt, damit beispielsweise die Gerichtsverhandlung selbst nicht als Podium missbraucht werden kann. Andernfalls könnte dem Gericht selbst Verfahrensfehler angelastet werden, oder nicht genehmigte Inhalte eingebracht und dargestellt werden.

Ausführungsbeispiele des Gerichtssaal-Mediensystems und des erfindungsgemäßen Verfahrens zur Steuerung eines Videokonferenzsystems sind in den Zeichnungen schematisch vereinfacht dargestellt und werden in der nachfolgenden Beschreibung näher erläutert.

Es zeigen:

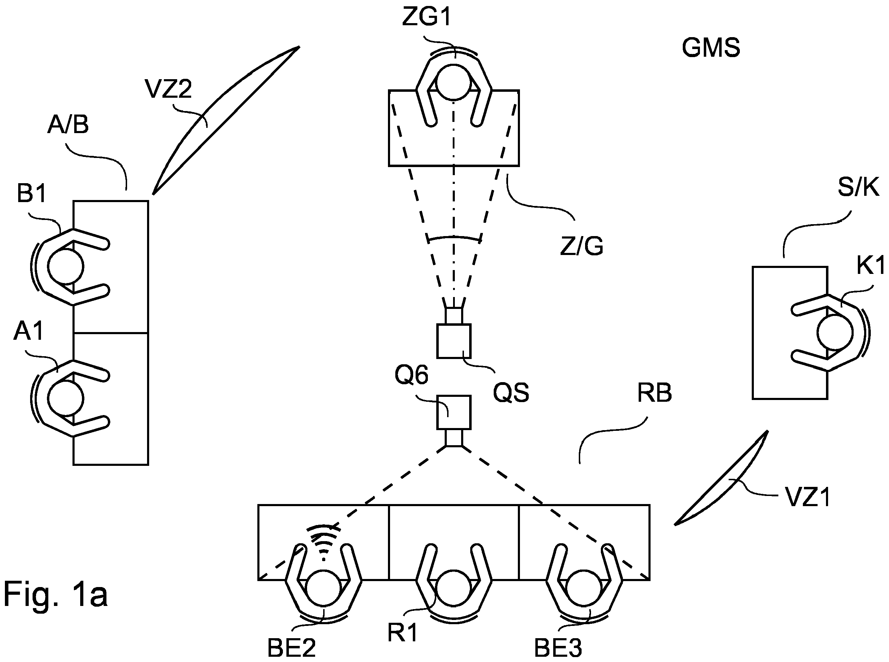

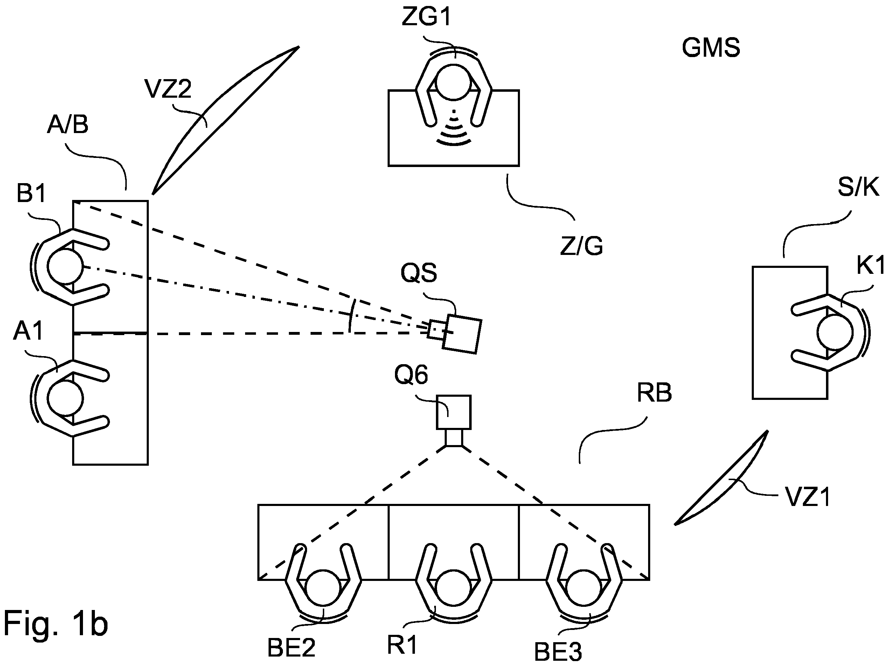

- Fig. 1 a:: Erfindungsgemäßes Gerichtssaal-Mediensystem mit einer festen Kamera und einer steuerbaren Kamera bei der Erfassung des Bereichs für Zeugen / Gutachter
- Fig. 1 b:: Erfindungsgemäßes Gerichtssaal-Mediensystem mit einer festen Kamera und einer steuerbaren Kamera bei der Erfassung des Bereichs für den Beklagten
- Fig. 2 a:: Erfindungsgemäßes Gerichtssaal-Mediensystem mit zwei steuerbaren Kameras; erste Ansicht

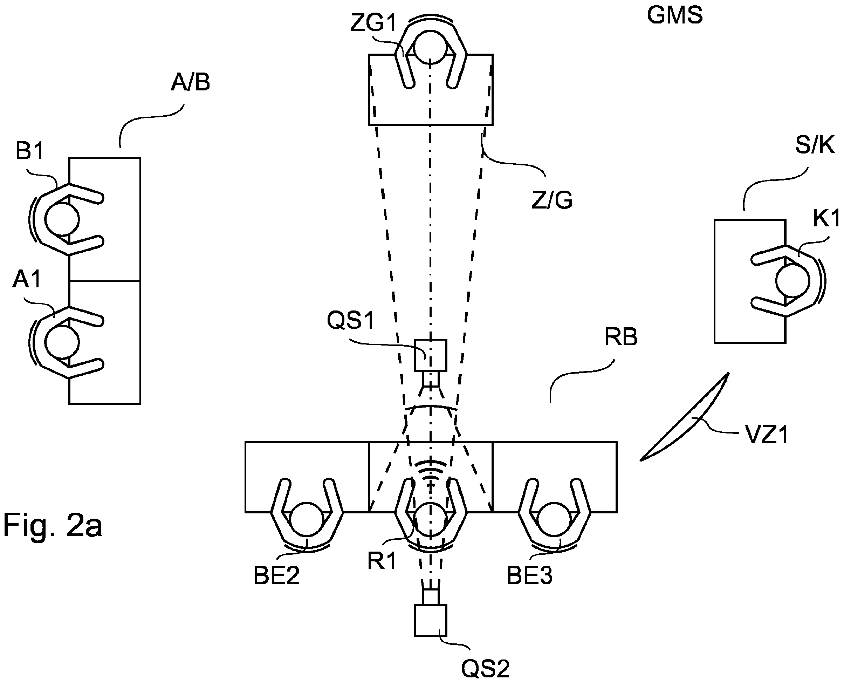

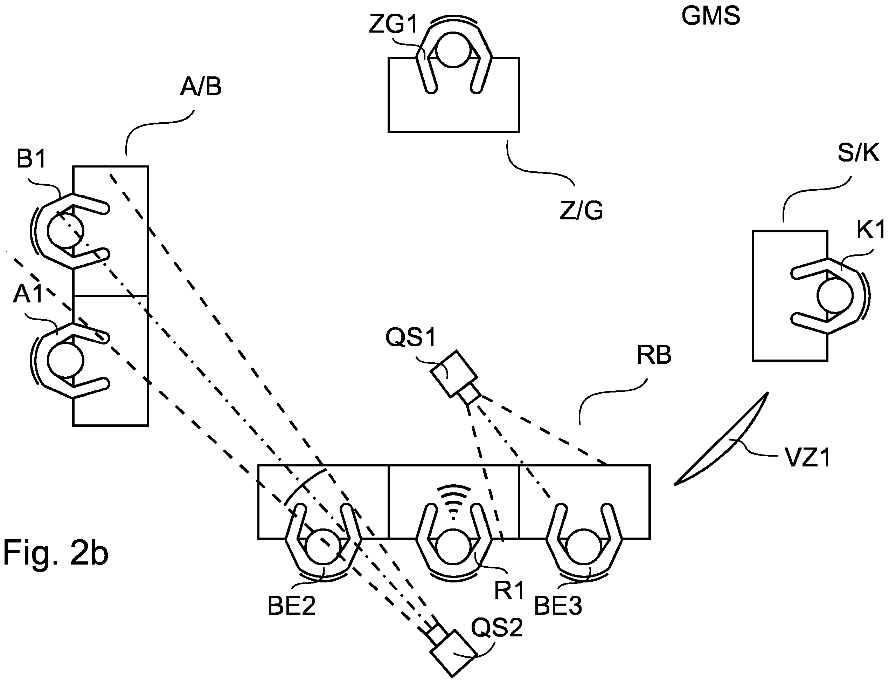

- Fig. 2 b:: Erfindungsgemäßes Gerichtssaal-Mediensystem mit zwei steuerbaren Kameras; zweite Ansicht

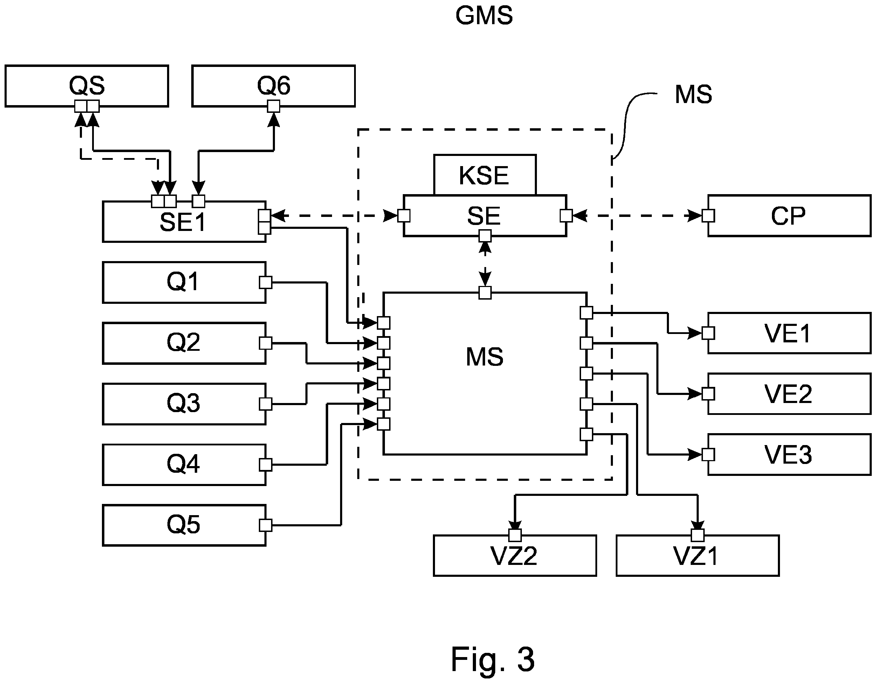

- Fig. 3: Verschaltung des erfindungsgemäßen Gerichtssaal-Mediensystems mit einer steuerbaren Quelle

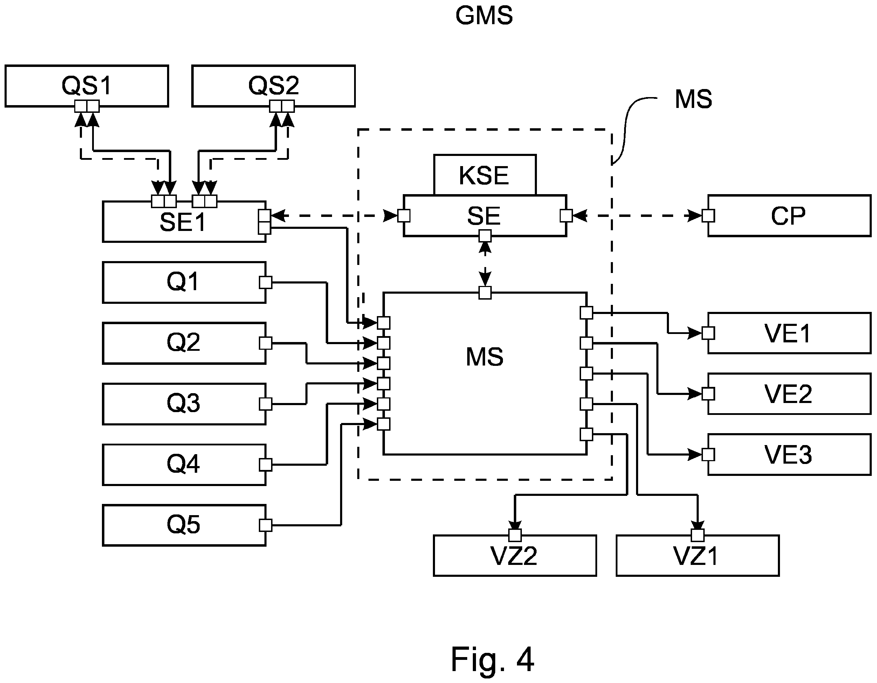

- Fig. 4:: Verschaltung des erfindungsgemäßen Gerichtssaal-Mediensystems mit zwei separaten Steuereinheiten

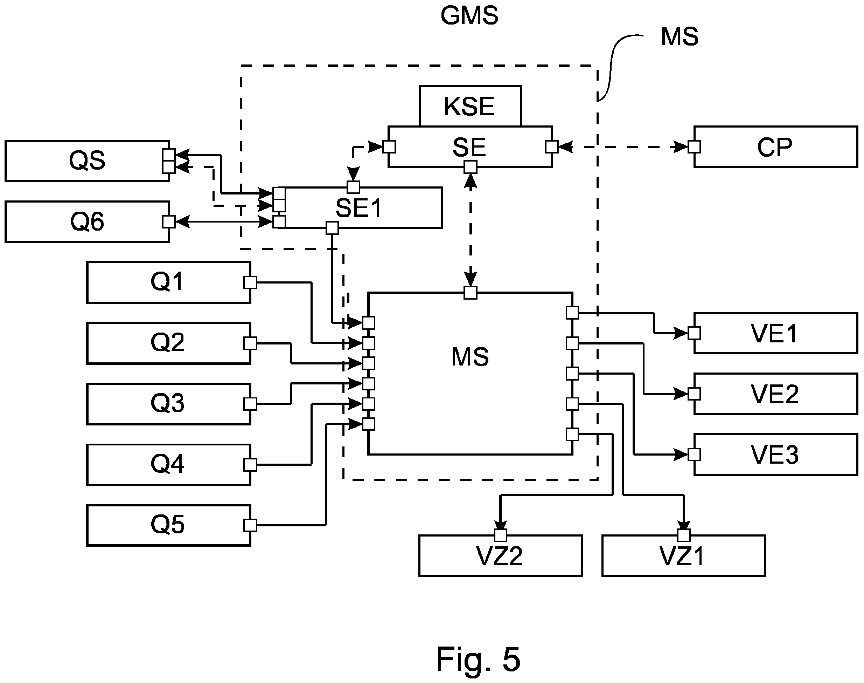

- Fig. 5:: Verschaltung des erfindungsgemäßen Gerichtssaal-Mediensystems mit zwei separaten Steuereinheiten innerhalb des Mediensystems

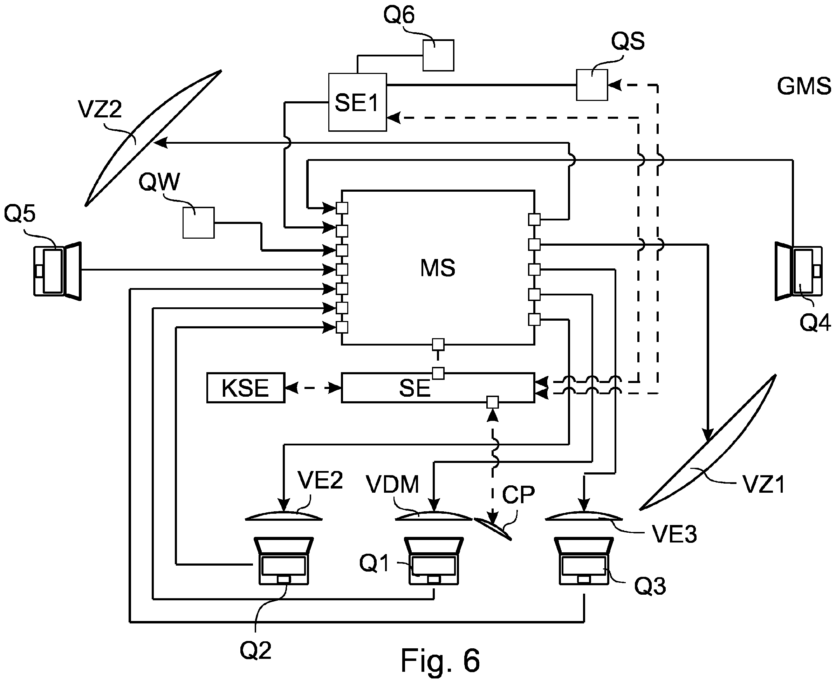

- Fig. 6:: Komponenten des erfindungsgemäßen Gerichtssaal-Mediensystems

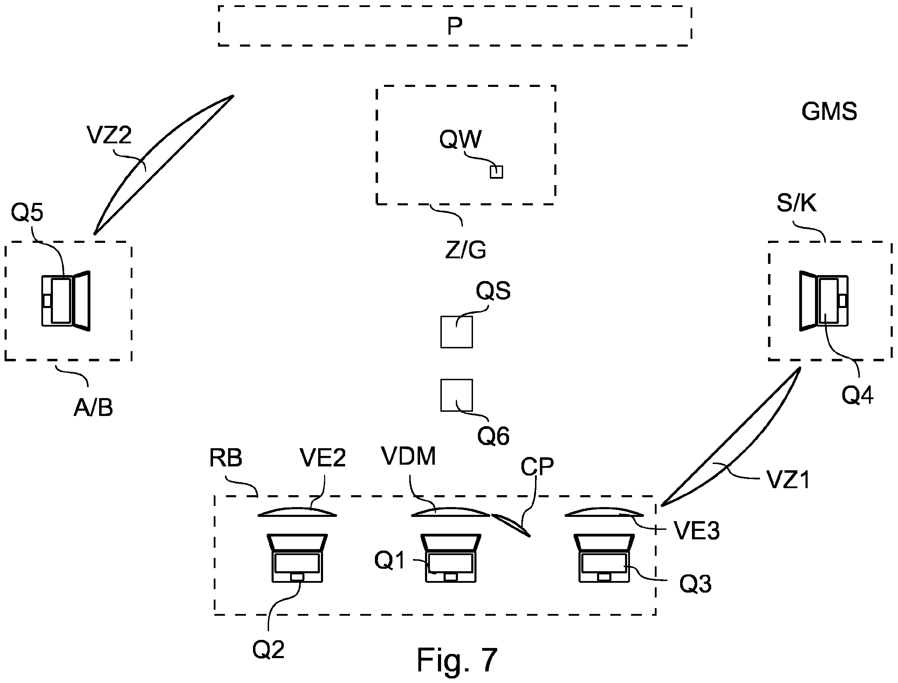

- Fig. 7:: Anordnung des erfindungsgemäßen Gerichtssaal-Mediensystems

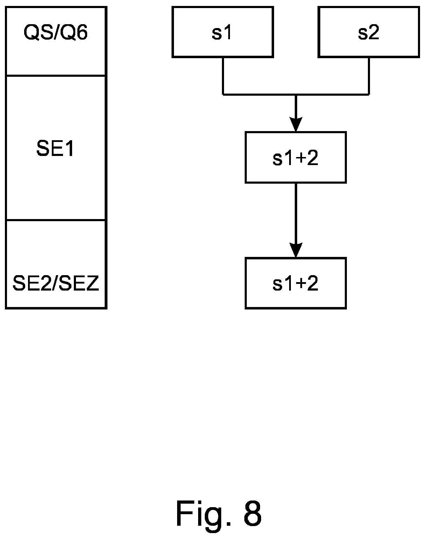

- Fig. 8:: Ein Ablaufdiagramm des erfindungsgemäßen Verfahrens zur Durchführung von Videokonferenzen

Fig. 1 zeigt ein Ausführungsbeispiel des erfindungsgemäßen Gerichtssaal-Mediensystems GMS. Der Gerichtssaal weist eine Richterbank RB mit jeweils einem Platz für den Vorsitzenden Richter R1 und zwei Beisitzenden Richtern BE2, BE3, einen Bereich Z/G für Zeugen bzw. Gutachter ZG1, einen Bereich für die Prozessparteien, Verteidigung A/B mit Beklagtem B1 und dessen Rechtsvertreter A1 sowie Klage S/K mit dem Kläger K1 auf.

Das Gerichtssaal-Mediensystem GMS weist in diesem Ausführungsbeispiel eine erste, nicht verstellbar angeordnete erste Kamera Q6 sowie eine zweite, steuerbare Kamera QS auf, die beide im Wesentlichen zentral im Gerichtssaal angeordnet sind.

Die erste Kamera Q6 weist in diesem Ausführungsbeispiel nur eine vordefinierte Einstellung auf. In dieser vordefinierten Einstellung ist die erste Kamera Q6 permanent auf den Bereich der Richterbank RB eingestellt, die erste steuerbare Kamera QS1 zeichnet daher permanent erste Videokonferenzen s1 des Bereichs der Richterbank RB und der darin angeordneten Personen R1, BE2, BE3 auf.

Die steuerbare Kamera QS weist in diesem Ausführungsbeispiel zwei unterschiedliche vordefinierte Einstellungen von steuerbaren Parametern (Schwenkwinkel, Neigungswinkel und Zoom-Einstellung) auf. In der ersten vordefinierten Einstellung ist die steuerbare Kamera QS auf den Bereich der Richterbank RB eingestellt (Fig. 1 a), in der zweiten vordefinierten Einstellung ist die steuerbare Kamera QS auf den Bereich der Verteidigung A/B derart eingestellt, dass die steuerbare Kamera QS zweite Videokonferenzen s2 des Beklagten B1 erfasst und aufzeichnet (Fig. 1 b).

Die steuerbare Kamera QS wird bei Empfang eines ersten Signals auf die erste vordefinierte Einstellung derart eingestellt, dass die steuerbare Kamera QS den Bereich der Richterbank RB erfasst (Fig. 1 a) und zweite Videokonferenzen s2 aufzeichnet. Das Signal ist in diesem Ausführungsbeispiel ein akustisches Signal, namentlich die Stimme eines an der Richterbank RB angeordneten Personen R1, BE2, BE3, die durch die Mikrophone des Gerichtssaal-Mediensystems GMS lokalisiert wird.

Jede der Stimmen der an der Richterbank angeordneten Richter R1, BE2, BE3 generiert also das erste akustische Signal, das von den Mikrophonen des Gerichtssaal-Mediensystems GMS lokalisiert wird. Die steuerbare Kamera QS wird bei Empfang dieses ersten akustischen Signals auf die erste vordefinierte Einstellung derart eingestellt, dass die steuerbare Kamera QS den Bereich der Richterbank RB erfasst (Fig. 1 a) und zweite Videokonferenzen s2 aufzeichnet.

Die steuerbare Kamera QS wird bei Empfang eines zweiten Signals auf die zweite vordefinierte Einstellung derart eingestellt, dass die steuerbare Kamera QS den Bereich des Beklagten B1 erfasst und zweite Videokonferenzen s2 aufzeichnet (Fig. 1 b). Das Signal ist in diesem Ausführungsbeispiel die Stimme einer am Bereich für Zeugen/Gutachter Z/G angeordneten Person ZG1. Insbesondere werden Gestik und Mimik von dem Beklagtem B1 aufgezeichnet und so dessen Reaktionen auf die Aussagen des Zeugen/Gutachters ZG1 dokumentiert.

Die Signale zur Änderung einer vordefinierten Einstellung der steuerbaren Kamera QS kann außerdem oder zusätzlich durch manuelle Eingabe in ein Control-Panel (s. Fig. 3 ff) erfolgen.

Zur Steuerung des Verfahrens zur Durchführung von Videokonferenzen werden die Videosequenzen s1, s2 von den beiden Video-Kameras Q6, QS an die an die Kameras Q6, QS gekoppelte erste Steuereinheit SE1 gesendet (s. Fig. 3 ff). Die erste Steuereinheit SE1 weist einen Speicher und einen Prozessor auf und führt ein erstes Software-Programm aus, das die beiden Videosequenzen s1, s2 zu einer zusammengesetzten Videosequenz s1 + 2 zusammensetzt. Die zusammengesetzte Videosequenz s1 + 2 wird dann die zweite Steuereinheit SE2 versandt, die die Videokonferenz ausführt. Die zusammengesetzte Videosequenz s1 + 2 wird dann auf einer oder beiden zweiten Ausgabeeinrichtungen VZ1, VZ2 weitergeleitet und ausgegeben.

Ein weiteres Ausführungsbeispiel des erfindungsgemäßen Gerichtssaal-Mediensystems GMS zeigt Fig. 2. In diesem Ausführungsbeispiel weist das Gerichtssaal-Mediensystem GMS zwei steuerbare Kameras QS1, QS2 auf. Die beiden steuerbaren Kameras QS1, QS2 sind an unterschiedlichen Positionen im Gerichtssaal angeordnet und jeweils unabhängig voneinander steuerbar. Das Gerichtssaal-Mediensystem GMS weist außerdem eine zweite Ausgabe-Einrichtungen VZ1 auf.

Die erste steuerbare Kamera QS1 weist in diesem Ausführungsbeispiel zwei vordefinierte Einstellungen der steuerbaren Parameter auf. In der ersten vordefinierten Einstellung ist die erste steuerbare Kamera QS1 auf den Bereich der Richterbank RB eingestellt, die erste steuerbare Kamera QS1 zeichnet erste Videosequenzen s1 des Vorsitzenden Richters R1 auf. In der zweiten vordefinierten Einstellung ist die erste steuerbare Kamera QS1 ebenfalls auf den Bereich der Richterbank RB eingestellt, die erste steuerbare Kamera zeichnet allerdings erste Videosequenzen s1 des Beisitzenden Richters BE3 auf.

Die zweite steuerbare Kamera QS2 weist ebenfalls zwei unterschiedliche vordefinierte Einstellungen auf: In der ersten vordefinierten Einstellung ist die zweite steuerbare Kamera QS2 auf den Bereich für Zeugen und Gutachter Z/G eingestellt (Fig. 2 a), in der zweiten vordefinierten Einstellung ist die zweite steuerbare Kamera QS2 auf den Bereich der Verteidigung A/B derart ausgerichtet, dass die zweite steuerbare Kamera QS2 auf die vordefinierte Position des Beklagten B1 zentriert ist (Fig. 2 b) und im Kamerabild der zweiten steuerbaren Kamera QS2 die Position des Beklagten B1 und der Beklagte B1 selbst erfasst wird. In beiden unterschiedlichen vordefinierten Einstellungen werden zweite Videosequenzen s2 durch die zweite steuerbaren Kamera QS2 erfasst.

Die Signale zur Änderung einer vordefinierten Einstellung der steuerbaren Kameras QS1, QS2 sind ebenfalls akustische Signale und/oder eine manuelle Eingabe in ein Control-Panel (s. Fig. 3 ff).

Zur Steuerung des Verfahrens zur Durchführung von Videokonferenzen werden die Videosequenzen s1, s2 von den beiden Video-Kameras QS1, QS2 an die erste Steuereinheit SE1 gesendet (s. Fig. 3 ff). Die erste Steuereinheit SE1 weist einen Speicher und einen Prozessor auf und führt ein erstes Software-Programm aus, das die beiden Videosequenzen s1, s2 zu einer zusammengesetzten Videosequenz s1 + 2 zusammensetzt. Die zusammengesetzte Videosequenz s1 + 2 wird dann die zweite Steuereinheit SE2 versandt, die die Videokonferenz ausführt. Die zusammengesetzte Videosequenz s1 + 2 wird dann auf die zweite Ausgabeeinrichtung VZ1 weitergeleitet und ausgegeben.

Die Verbindungen zwischen den einzelnen Komponenten eines Ausführungsbeispiels des erfindungsgemäßen Gerichtssaal-Mediensystems GMS zeigt Fig. 3. Die Gerichtssaal-Mediensystem GMS weist als zentrales Element das Mediensystem MES mit der Matrix-Schaltung MS, der zentralen Steuereinheit SEZ und der separaten Konfigurationssteuereinheit KSE auf, mit der die Quellen Q1, Q2, Q3, Q4, Q5 über Quell-Schnittstellen verbunden sind. Die Quellen Q1, Q2, Q3, Q4, Q5 sind mobile Endgeräte (Laptops) des Vorsitzenden Richters Q1, der beiden Beisitzer Q2, Q3, sowie jeweils ein mobiles Endgerät Q4, Q5 der beiden Prozessparteien (s. Fig. 6, 7).

Die Matrix-Schaltung MS ist mit der zentralen Steuereinheit SEZ verbunden und durch diese steuerbar. Die zentrale Steuereinheit SEZ weist dazu einen Prozessor, Speicher und ein geeignetes Software-Programm auf. Die zentrale Steuereinheit SEZ ist außerdem zusätzlich eingerichtet, die Funktion der zweiten Steuereinheit SE2 wahrzunehmen. Die zentrale Steuereinheit/Zweite Steuereinheit SEZ/SE2 weist dazu ebenfalls ein zweites geeignetes Software-Programm auf. Zusätzlich ist die zentrale Steuereinheit/Zweite Steuereinheit SEZ/SE2 dafür geeignet und vorgesehen, die Videokonferenz durchzuführen und verfügt dazu ebenfalls über ein geeignetes Software-Programm.

Mit der zentralen Steuereinheit SEZ ist außerdem die erste Steuereinheit SE1 verbunden, die in diesem Ausführungsbeispiel nicht Teil des Mediensystems MES ist, sondern separat angeordnet ist. Mit der ersten Steuereinheit SE1 ist eine fest angeordnete erste Kamera Q6, die eine erste Videosequenz s1 aufnimmt, sowie eine zweite steuerbare Kamera QS, die eine zweite Videosequenz s2 aufnimmt, über Schnittstellen verbunden. Die erste Steuereinheit SE1 weist ebenfalls einen Prozessor und einen Speicher auf, die dafür vorgesehen und dafür geeignet sind ein Software-Programm auszuführen.

Mit der Matrix-Schaltung MS sind weiterhin die Ausgabeeinrichtungen VE1, VE2, VE3, VZ1, VZ2 über Ausgabe-Schnittstellen angeschlossen. Die Ausgabeeinrichtung VDM ist dabei die Master-Ausgabeeinrichtung und gibt Bild- und/oder Toninhalte dem Vorsitzenden Richter aus. Die ersten Ausgabeeinrichtungen VE1, VE2, VE3 sind dafür eingerichtet, Bild- und/oder Toninhalte dem Vorsitzenden Richter R1 und den Beisitzern BE2, BE3 auszugeben. Die zweiten Ausgabeeinrichtungen VZ1, VZ2 sind öffentlich zugängliche Ausgabeeinrichtungen.

Mit der zentralen Steuereinheit/Zweiten Steuereinheit SEZ/SE2 ist ebenfalls die Konfigurationssteuereinheit KSE verbunden. Die Daten zur Installation und/oder Konfiguration zentralen Steuereinheit/Zweiten Steuereinheit SEZ/SE2 sind in einem Speicher der separaten Konfigurationssteuereinheit KSE gespeichert. Die Daten enthalten die für den betreffenden Gerichtssaal, in dem das Gerichtssaal-Mediensystem GMS angewandt werden soll, installations- und/oder konfigurationsrelevante Einstellungen.

Diese Daten werden von der zentralen Steuereinheit/zweiten Steuereinheit SEZ/SE2 eingelesen.

Über das Bedienelement des Control-Panels CP kann der Bediener des Control-Panels CP die Ausgabe der empfangenen Bild- und/oder Toninhalte steuern. Zur Konfiguration der Ausgabe und Wechseln von unterschiedlichen Sätzen von Medieninhalten des erfindungsgemäßen Gerichtssaal-Mediensystems GMS erfolgt eine Abfrage von Daten zur Installation und/oder Konfiguration der zentralen Steuereinheit SE.

Die Steuerung der Gerichtssaal-Mediensystemsteuerung GMS erfolgt über ein Control-Panel CP. Der Vorsitzende Richter kann mittels des Control-Panels CP die gesamte Technik der Gerichtssaal- Mediensystemsteuerung GMS im Sitzungssaal steuern. Hierfür ist das Control-Panel ist im Gerichtssaal selbst angeordnet und wird am Platz des Vorsitzenden angeordnet. Es ist aber auch möglich, diese Steuerung über das Control-Panel CP an eine andere Person zu übertragen, so dass der Vorsitzende damit nicht zusätzlich belastet wird.

Das Gerichtssaal-Mediensystem kann so optional als geschlossenes System betrieben werden, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

Fig. 4 zeigt eine Variante der Verbindungen zwischen den einzelnen Komponenten eines Ausführungsbeispiels des erfindungsgemäßen Gerichtssaal-Mediensystems GMS. Das hier dargestellte Gerichtssaal-Mediensystem GMS entspricht dem im vorstehenden Ausführungsbeispiel (s. Fig. 3) dargestellten, in diesem Ausführungsbeispiel ist mit der ersten Steuereinheit SE1 eine steuerbare erste Kamera QS1, die eine erste Videosequenz s1 aufnimmt, sowie eine zweite steuerbare Kamera QS2, die eine zweite Videosequenz s2 aufnimmt, über Schnittstellen verbunden.

Ein weiteres Ausführungsbeispiel der Verbindungen zwischen den einzelnen Komponenten des erfindungsgemäßen Gerichtssaal-Mediensystems GMS zeigt Fig. 5. Das hier dargestellte Gerichtssaal-Mediensystem GMS entspricht ebenfalls dem im vorstehenden Ausführungsbeispiel (s. Fig. 3) dargestellten. Mit der ersten Steuereinheit SE1 ist wiederum eine fest angeordnete erste Kamera Q6, die eine erste Videosequenz s1 aufnimmt, sowie eine zweite steuerbare Kamera QS, die eine zweite Videosequenz s2 aufnimmt, über Schnittstellen verbunden. Im Unterschied zu den vorherstehenden Ausführungsbeispielen (s. Fig. 3, 4) ist die erste Steuereinheit SE1 jedoch Teil des Mediensystems MES und in dem Mediensystem MES angeordnet.

In einer weiteren Variante sind erste Steuereinheit SE1, zweite Steuereinheit SE2 und zentrale Steuereinheit SEZ in einem Gerät angeordnet und weisen geeignete SoftwareProgramme jeweils zur Durchführung der Steuerung des Mediensystems MES, zur Durchführung der Videokonferenz und zur Durchführung des erfindungsgemäßen Verfahrens zur Durchführung von Videokonferenzen (s. Fig. 8) auf.

Fig. 6 und Fig. 7 zeigen eine beispielhafte Anordnung eines Ausführungsbeispiels des erfindungsgemäßen Gerichtssaal-Mediensystems GMS in einem Gerichtssaal. Der Gerichtssaal weist einen öffentlich zugänglichen Bereich P für Zuschauer, eine Richterbank RB mit jeweils einem Platz für den Vorsitzenden Richter und zwei Beisitzenden Richtern, einen Bereich Z/G für Zeugen bzw. Gutachter, einen Bereich für die Prozessparteien, Verteidigung A/B mit Beklagtem und dessen Rechtsvertreter sowie Klage S/K mit dem Kläger auf.

Die Quellen Q1, Q2, Q3, Q4, Q5 sind in diesem Ausführungsbeispiel mobile Endgeräte (Laptops) des Vorsitzenden Richters Q1, der beiden Beisitzer Q2, Q3, sowie jeweils ein mobiles Endgerät Q4, Q5 der beiden Prozessparteien. Zusätzlich wird über einen freien Anschluss die Möglichkeit bereitgestellt, dass ein Zeuge und/oder ein Gutachter eine freie Quelle QW anschließen kann.

Mit der zentralen Steuereinheit SEZ ist außerdem die erste Steuereinheit SE1 verbunden. Mit der ersten Steuereinheit SE1 ist eine fest angeordnete erste Kamera Q6, die eine erste Videosequenz s1 aufnimmt, sowie eine zweite steuerbare Kamera QS, die eine zweite Videosequenz s2 aufnimmt, über Schnittstellen verbunden.

Mit der zentralen Steuereinheit/Zweiten Steuereinheit SEZ/SE2 ist ebenfalls die Konfigurationssteuereinheit KSE lösbar verbunden. Die Daten zur Installation und/oder Konfiguration zentralen Steuereinheit/Zweiten Steuereinheit SEZ/SE2 sind in einem Speicher der separaten Konfigurationssteuereinheit KSE gespeichert.

Das Gerichtssaal-Mediensystem GMS weist die Ausgabeeinrichtungen VDM, VE2, VE3, VZ1 auf. Die Ausgabeeinrichtung VDM ist dabei die Master-Ausgabeeinrichtung und gibt Bild- und/oder Toninhalte dem Vorsitzenden Richter R1 oder einem von ihm beauftragen Bediener des Gerichtssaal-Mediensystems GMS aus. Die ersten Ausgabeeinrichtungen VE2, VE3 sind dafür eingerichtet, Bild- und/oder Toninhalte den Beisitzern BE2, BE3 auszugeben. Die zweiten Ausgabeeinrichtungen VZ1, VZ2 sind öffentlich zugängliche Ausgabeeinrichtungen, in diesem Ausführungsbeispiel Großbildschirme oder Leinwände zur Ausgabe von Medieninhalten, insbesondere Bild- und/oder Toninhalten.

Die Steuerung des Gerichtssaal-Mediensystem GMS erfolgt über ein Control-Panel CP. Der Vorsitzende Richter kann mittels des Control-Panel CP die gesamte Technik des Gerichtssaal-Mediensystem GMS im Sitzungssaal steuern. Es ist aber auch möglich, diese Steuerung über das Control-Panel CP an eine andere Person zu übertragen, so dass der Vorsitzende damit nicht zusätzlich belastet wird.

Fig. 8 zeigt ein Ausführungsbeispiel des erfindungsgemäßen Verfahrens zur Steuerung eines Videokonferenzsystems SEZ. Dazu werden zuerst von der ersten Video-Kamera Q6 eine erste Videosequenz s1 aufgenommen, von der zweiten Video-Kamera QS wird eine zweite Videosequenz s2 aufgenommen. Die Videosequenzen s1, s2 weisen Längen von kleiner 250 ms, bevorzugt kleiner 150 ms und besonders bevorzugt kleiner 100 ms auf. Beide Videosequenzen s1, s2 weisen außerdem die gleiche zeitliche Länge auf.

Die Videosequenzen s1, s2 werden einzeln von den beiden Video-Kameras Q6, QS an die an die Kameras Q6, QS gekoppelte erste Steuereinheit SE1 gesendet. Zusätzlich ist es vorgesehen, dass weitere Daten an die erste Steuereinheit gesendet werden, z.B. Bild- und/oder Toninhalte von beispielsweise Gutachten und/oder Zeugenaussagen. Die erste Steuereinheit SE1 weist einen Speicher und einen Prozessor auf und führt ein erstes Software-Programm aus, das die beiden Videosequenzen s1, s2 zu einer zusammengesetzten Videosequenz s1 + 2 zusammensetzt.

Aufgrund der gleichen zeitlichen Länge der Videosequenzen s1, s2 ist es möglich, mehrere mit der ersten Videokamera Q6 zeitlich aufeinanderfolgend aufgenommene Videosequenzen s1 mit mehreren mit der zweiten Videokamera QS zeitlich aufeinanderfolgend aufgenommene Videosequenzen s2 zusammenzusetzen.

Die zusammengesetzte Videosequenz s1 + 2 wird dann die zweite Steuereinheit SE2 versandt, die die Videokonferenz ausführt. Insbesondere können die erste Videosequenz s1 und die zweite Videosequenz s2 als Teile der zusammengesetzten Videosequenz s1 + 2 nebeneinander dargestellt werden. Die erste Videosequenz s1 und die zweite Videosequenz s2 werden dann zeitgleich getrennt voneinander auf einer oder einer Mehrzahl von unterschiedlichen Ausgabeeinrichtungen VDM, VE1, VE2, VE3, VE4, VE5, VZ1, VZ2 weitergeleitet und ausgegeben. Möglich ist auch die gleichzeitige Ausgabe der ersten s1 und der zweiten Videosequenz s2 auf einer oder mehreren Ausgabeeinrichtungen VDM, VE1, VE2, VE3, VE4, VE5, VZ1, VZ2 als Splitscreen.

Üblicherweise werden auf der zweiten Steuereinheit SE2 eine Mehrzahl von zusammengesetzten Videosequenzen s1 + 2 hintereinandergefügt. Die zweite Steuereinheit verfügt dazu über ein zweites Steuerprogramm ebenfalls in einem Speicher gespeichert. Das Zusammensetzen der Videosequenzen s1, s2 zu einer zusammengesetzten Videosequenz s1 + 2 und das Hintereinanderfügen der einzelnen zusammengesetzten Videosequenzen s1 + 2 erfolgt mittels voneinander getrennten und unterschiedlich ausgeführten Steuerprogrammen.

Die erste Steuereinheit SE1 kann neben dem erstes Software-Programm eine weiteres Software-Programm zur Ausführung und Steuerung des Videokonferenzsystems aufweisen bzw. das Videokonferenzsystem ist als Software-Programm auf der ersten Steuereinheit SE1 installiert. Die erste Steuereinheit ist üblicherweise Teil des Mediensystems MES und mit dem Mediensystem MES über eine Eingangs- und eine Ausgangsschnittstelle verbunden.

In einer weiteren Ausführung ist die zweite Steuereinheit SE2 ebenfalls Teil des Videokonferenzsystems, das auf der ersten Steuereinheit SE1 angeordnet ist. Die erste Steuereinheit SE1 und die zweite Steuereinheit SE2 sind dann in einem Gerät angeordnet und weisen einen Prozessor und einen Speicher, aber unterschiedliche SoftwareProgramme für die Ausführung des Zusammensetzens der ersten s1 und zweiten Videosequenzen s2 zu einer zusammengesetzten Videosequenz s1 + 2, dem Hintereinanderfügen der einzelnen zusammengesetzten Videosequenzen s1 + 2 und die Ausführung und Steuerung des Videokonferenzsystems auf.
- GMS: Gerichtssaal-Mediensystem
- VE1, VE2, VE3, VE4, VE5: Erste Ausgabeeinrichtung
- VDM: Master-Ausgabeeinrichtung
- VZ1, VZ2: Zweite Ausgabeeinrichtung
- MES: Mediensystem
- MS: Matrix-Schaltung
- SEZ: Zentrale Steuereinheit
- SE1: Erste Steuereinheit
- SE2: Zweite Steuereinheit / Videokonferenzsystem
- CP: Control-Panel
- Q1, Q2, Q3, Q4, Q5, Q6: Quelle / Erste Kamera
- QS, QS1, QS2: Zweite Kamera / Steuerbare Kamera
- QW: Freie Quelle
- RB: Richterbank
- R1: Vorsitzender Richter
- BE2, BE3: Beisitzender Richter
- P: Zuschauerbereich
- Z/G: Bereich für Zeugen und Gutachter
- ZG1: Zeuge/Gutachter
- S/K: Bereich für Staatsanwalt/Klage
- K1: Kläger
- A/B: Bereich für Verteidigung
- A1: Verteidiger
- s1: Erste Videosequenz
- s2: Zweite Videosequenz
- s1 + 2: Zusammengesetzte Videosequenz

## Patentansprüche

1. Verfahren zur Steuerung eines Videokonferenzsystems (SEZ) mit den Verfahrensschritten
• Aufnahme einer ersten Videosequenz (s1) mit einer ersten Video-Kamera (Q6, QS1)
• Aufnahme einer zweiten Videosequenz (s2) mit einer zweiten Video-Kamera (QS, QS2)
• Zusammenfügen der ersten Videosequenz (s1) und der zweiten Videosequenz (s2) zu einer zusammengesetzten Videosequenz (s1 + 2)
• Übertragen der zusammengesetzten Videosequenz (s1 + 2) an ein Videokonferenzsystem (SEZ)

2. Verfahren zur Steuerung eines Videokonferenzsystems (SEZ) nach Anspruch 1,
**dadurch gekennzeichnet, dass**
die Länge der ersten Videosequenz (s1) und der zweiten Videosequenz (s2) jeweils kleiner 250 ms, bevorzugt kleiner als 150 ms und besonders bevorzugt kleiner als 100 ms ist,
wobei die Länge der ersten Videosequenz (s1) und die Länge der zweiten Videosequenz (s2) gleich lang sind.

3. Verfahren zur Steuerung eines Videokonferenzsystems (SEZ) nach einem oder mehreren der Ansprüche,
**dadurch gekennzeichnet, dass**
die erste Videosequenz (s1) und die zweite Videosequenz (s2) in der zusammengesetzten Videosequenz (s1 + 2) nebeneinander dargestellt werden.

4. Verfahren zur Steuerung eines Videokonferenzsystems (SEZ) nach einem oder mehreren der Ansprüche,
**dadurch gekennzeichnet, dass**
mehrere mit der ersten Videokamera (Q6, QS1) zeitlich aufeinanderfolgend aufgenommene Videosequenzen (s1) mit mehreren mit der zweiten Videokamera (QS, QS2) zeitlich aufeinanderfolgend aufgenommene Videosequenzen (s2) zusammengesetzt werden.

5. Verfahren zur Steuerung eines Videokonferenzsystems (SEZ) nach einem oder mehreren der Ansprüche,
**dadurch gekennzeichnet, dass**
die an das Videokonferenzsystem (SEZ) übertragenen Videosequenzen (s1 + 2) in einem Live-Stream an weitere Teilnehmer der Videokonferenz übertragen werden.

6. Verfahren zur Steuerung eines Videokonferenzsystems (SEZ) nach einem oder mehreren der Ansprüche,
**dadurch gekennzeichnet, dass**
das Zusammensetzen der ersten Videosequenz (s1) mit der zweiten Videosequenz (s2) auf einer ersten Steuereinheit (SE1) erfolgt.

7. Verfahren zur Steuerung eines Videokonferenzsystems (SEZ) nach einem oder mehreren der Ansprüche,
**dadurch gekennzeichnet, dass**
zwei zusammengesetzte Videosequenzen (s1 + 2) hintereinandergefügt werden.

8. Verfahren zur Steuerung eines Videokonferenzsystems (SEZ) nach einem oder mehreren der Ansprüche,
**dadurch gekennzeichnet, dass**
das Zusammensetzen der ersten Videosequenz (s1) mit der zweiten Videosequenz (s2) und das Hintereinanderfügen der zusammengesetzten Videosequenzen (s1 + 2) auf voneinander getrennten Steuereinheiten (SE1, SE2) erfolgt,
wobei das Hintereinanderfügen der zusammengesetzten Videosequenzen (s1 + 2) auf einer zweiten Steuereinheit (SE2) erfolgt.

9. Verfahren zur Steuerung eines Videokonferenzsystems (SEZ) nach einem oder mehreren der Ansprüche,
**dadurch gekennzeichnet, dass**
das Zusammensetzen der ersten Videosequenz (s1) mit der zweiten Videosequenz (s2) und das Hintereinanderfügen der zusammengesetzten Videosequenzen (s1 + 2) durch voneinander getrennte Steuerprogramme erfolgt.

10. Gerichtssaal-Mediensystem (GMS) zur Durchführung von Videokonferenzen mit
• einer ersten Steuereinheit (SE1),
wobei die erste Steuereinheit (SE1) einen Prozessor und einen Speicher aufweist, die dafür vorgesehen und dafür geeignet sind ein Software-Programm auszuführen
• zwei mit der ersten Steuereinheit (SE1) gekoppelten Kameras (Q6, QS, QS1, QS2),
• einer zweiten Steuereinheit (SE2), die dafür geeignet und dafür vorgesehen ist, die Videokonferenz auszuführen.

11. Gerichtssaal-Mediensystem (GMS) zur Durchführung von Videokonferenzen nach Anspruch 10,
**dadurch gekennzeichnet, dass**
die erste Steuereinheit (SE1) Teil eines Mediensystems (MES) ist.

12. Gerichtssaal-Mediensystem (GMS) zur Durchführung von Videokonferenzen nach Anspruch 10 oder 11,
**dadurch gekennzeichnet, dass**
die erste Steuereinheit (SE1) als separate Steuereinheit des Mediensystems (MES) ausgeführt ist.

13. Gerichtssaal-Mediensystem (GMS) zur Durchführung von Videokonferenzen nach einem oder mehreren der Ansprüche 10 bis 12,
**dadurch gekennzeichnet, dass**
das Videokonferenzsystem (SEZ) an einen Eingang und an einen Ausgang des Mediensystems (MES) angeschlossen ist.

14. Gerichtssaal-Mediensystem (GMS) zur Durchführung von Videokonferenzen nach einem oder mehreren der Ansprüche 10 bis 13,
**dadurch gekennzeichnet, dass**
das Videokonferenzsystem (SEZ) als Software auf der ersten Steuereinheit (SE1) installiert ist.

15. Gerichtssaal-Mediensystem (GMS) zur Durchführung von Videokonferenzen nach einem oder mehreren der Ansprüche 10 bis 14,
**dadurch gekennzeichnet, dass**
die zweite Steuereinheit (SE2) Teil eines Videokonferenzsystems (SEZ) ist.
